# EUROPÄISCHE PATENTSCHRIFT

(11) **EP 2 204 299 B1**
(45) Veröffentlichungstag und Bekanntmachung des Hinweises auf die Patenterteilung: **18.04.2012**
(21) Anmeldenummer: 09180947.5
(22) Anmeldetag: 30.12.2009
(51) Int. Cl.: B60K 7/00, B60K 17/04

(54) **Fahrzeugantriebssystem**
Vehicle drive system
Système d'entraînement d'un véhicule

(30) Priorität: 30.12.2008 AT 7582008 U
(43) Veröffentlichungstag der Anmeldung: 07.07.2010
(73) Patentinhaber: Intellectual Capital and Asset Management GmbH, 2352 Gumpoldskirchen (AT)
(72) Erfinder: Wallner, Gerold, 2352, Gumpoldskirchen (AT)
(74) Vertreter: Müllner, Martin

(56) Entgegenhaltungen:
- EP-A2- 1 889 743
- GB-A- 283 654
- US-A- 1 457 683

## Beschreibung

### Technisches Gebiet

Die Erfindung betrifft ein Fahrzeugantriebssystem mit einem zusätzlichen Elektroantrieb.

### Stand der Technik

Derartige Antriebssysteme sind bekannt und auch in Verwendung. Bei diesen bekannten Lösungen ist (meist zusätzlich zu einem Explosionsmotor) ein einzelner Elektromotor vorgesehen, der über einen Akkumulator versorgbar ist. Der Elektromotor wirkt dabei in der Regel auf den üblichen Antriebsstrang des Fahrzeuges ein.

Der Vorteil solcher Fahrzeugantriebssysteme liegt besonders im Stadtverkehr mit häufigem Stop-and-Go Verkehr, bei dem ein Explosionsmotor sehr ineffektiv betrieben wird und einen hohen CO₂ -Ausstoß verursacht. Für einen derartigen Betrieb kann einfach statt des Explosionsmotors (oder auch zusätzlich zu diesem) der Elektroantrieb verwendet werden. Im Hinblick auf die CO₂-Problematik wäre es wünschenswert, den Individualverkehr zu einem hohen Anteil mit derartigen Fahrzeugantriebssystemen, so genannten Hybridantrieben, abzuwickeln.

Es ist bereits bekannt, den Elektroantrieb durch mehrere miteinander gekoppelte Elektromotoren zu bilden, die gemeinsam auf ein Treibrad einwirken, das mit einem Antriebsrad des Fahrzeugs kuppelbar ist ( US 4685354 , US 2006137926 A, EP 1671832 A).

Durch diese vorgeschlagenen Maßnahmen kann eine entsprechende Anzahl von kleinen Elektromotoren vorgesehen sein. Dies ermöglicht es, die Anordnung der Elektromotore nach den jeweiligen Platzverhältnissen zu variieren und in Nischen, z.B. im Bereich der Radkästen, unterzubringen. Dabei können z.B. Motore für Modellfahrzeuge, z.B. Modellhelikopter, verwendet werden. Solche Motoren können in der Regel für kurze Zeit hohe Leistungen entwickeln. Dadurch ergibt sich ein hohes Leistungsgewicht. Dadurch wird ermöglicht, bestehende Fahrzeuge mit einem Elektroantrieb nachzurüsten.
EP 1 889 743 beschreibt ein Fahrzeugantriebssystem mit einem Elektroantrieb und einer Akkumulatoranordnung
, wobei der Elektroantrieb durch mindestens einen Elektromotor gebildet ist, der auf ein Treibrad einwirkt
wobei das Antriebsrad als Inlay-Felge ausgebildet und gemeinsam mit der Felge des Rades an der Achse des Fahrzeugs befestigbar ist, wobei die Inlay-Felge ein Hohlrad aufweist, und wobei das Treibrad mit dem Hohlrad kämmt.

Es ist weiters aus der EP 1671832 A bekannt, ein Antriebsrad mit dessen Nabe zwischen Felge und Achse einzuklemmen und mit den Radmuttern alle Teile aneinander zu fixieren. Gemäß der EP 1671832 A ist das Treibrad eine Zahnriemenscheibe. Zahnriemenantriebe haben jedoch bekannte Nachteile, wie Verschleiß (d.h. der Zahnriemen muss regelmäßig getauscht werden), Dehnung etc.

### Darstellung der Erfindung

Verwendet man statt des Zahnriemens ein Zahnrad, das direkt von einem Ritzel (Treibrad) angetrieben wird, so hat man das Problem von Schmutz und auch von einer unerwünscht hohen Geräuschentwicklung.

Es ist Aufgabe der vorliegenden Erfindung, diese Nachteile zu beseitigen.

Erfindungsgemäß wird dies durch ein Fahrzeugantriebssystem gemäss Anspruch 1 gelöst.

Erfindungsgemäß weist also die Inlay-Felge ein Hohlrad auf, wobei das Treibrad mit dem Hohlrad kämmt. Durch diese relativ einfache Maßnahme ist der Antrieb bereits weitgehend vor Verschmutzung geschützt, und auch die Schallemission nach außen ist infolge des Hohlrades reduziert.

Um Gewicht zu sparen, ist es zweckmäßig, dass das Hohlrad mit der Nabe der Inlay-Felge über Speichen verbunden ist. Andernfalls sollte die Inlay-Felge zumindest Entwässerungsöffnungen aufweisen, um Wasseransammlungen zwischen Inlayfelge und herkömmlicher Felge zu verhindern.

Ein zusätzlicher Schutz gegen Verschmutzung kann dadurch erreicht werden, dass das Hohlrad in einem feststehenden Schutztunnel angeordnet ist. Dabei kann zur mechanischen Befestigung ein Lastarm vorgesehen sein, der mit der Achse des Fahrzeugs fix verbindbar ist, das Antriebsritzel mit seiner Lagerung trägt und auch den Schutztunnel in Position hält. Zur Erhöhung der Stabilität kann der Schutztunnel zusätzlich durch Haltespeichen in Position gehalten sein.

Dabei ist es zweckmäßig, zwischen dem Schutztunnel und der Inlay-Felge zumindest eine Dichtung vorzusehen und den Schutztunnel gegen die Inlay-Felge vorzuspannen, sodass die Dichtung unter leichtem Druck steht.

Schließlich ist es günstig, an dem Schutztunnel zumindest einen Steg zur Formstabilisierung vorzusehen, damit dieser nicht am Hohlrad schleifen kann.

### Kurze Beschreibung der Abbildungen der Zeichnungen

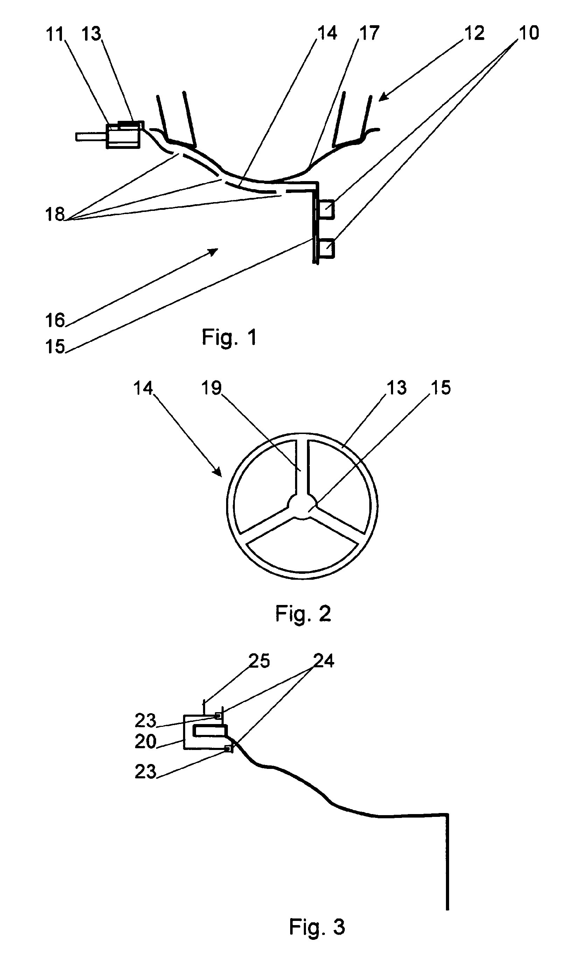

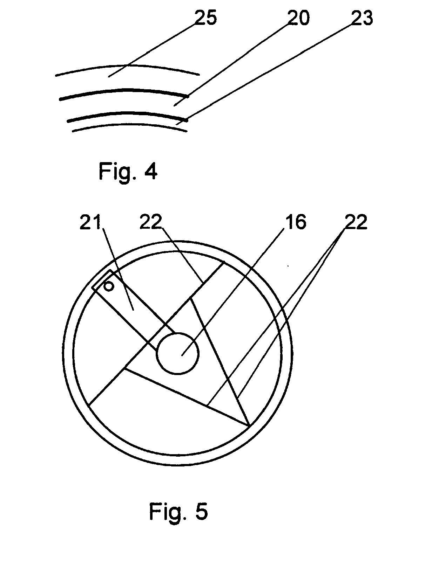

Die Erfindung wird nun anhand der Zeichnungen näher erläutert. Dabei zeigt: Fig. 1 einen teilweisen Schnitt durch ein erfindungsgemäßes Fahrzeugantriebssystem, eingebaut an einer Fahrzeugachse; Fig. 2 eine mögliche Ausführungsform einer Inlayfelge; Fig. 3 eine Ausführungsform mit Schutztunnel; Fig. 4 eine vergrößerte Ansicht eines Ausschnitts des Schutztunnels von links (wie in Fig. 3 gesehen); und Fig. 5 die mechanische Befestigung des Schutztunnels.

### Weg(e) zur Ausführung der Erfindung

Die Elektromotore sind in den Figuren nicht dargestellt. Bevorzugt sind mehrere Elektromotore voneinander beabstandet angeordnet. Diese Elektromotore sind mit Ritzeln versehen, die miteinander in Eingriff stehen und mit einem Treibrad 11 in Antriebsverbindung stehen. Dieses Treibrad 11 ist mit einem Rad 12 eines Fahrzeugs kuppelbar. Zu diesem Zweck greift das Treibrad 11 in die Verzahnung eines Hohlrades 13 ein. Das Hohlrad 13 ist Teil einer Inlay-Felge 14 mit einer Nabe 15. Diese Nabe 15 wird zwischen der Achse 16 und der Felge 17 des Rades 12 montiert und mit der Felge 17 gemeinsam mittels Bolzen 10 angeschraubt. Eine solche Inlay-Felge 14 erhöht die Spurbreite nur minimal und ermöglicht die Weiterverwendung der bestehenden reifentragenden Felgen 17. Die gesetzliche Toleranz der Spurbreite beträgt 2 %, was für das Anbringen der Inlay-Felge 14 ausreicht.

Das Hohlrad 13 muss mit hoher Präzision gewuchtet sein, damit das Treibrad 11 mit geringstmöglicher Abnutzung mit dem Hohlrad 13 kämmen kann.

Gemäß Fig. 1 ist die Inlayfelge voll ausgebildet und mit Entwässerungsöffnungen 18 versehen. Alternativ dazu ist es auch möglich, zwischen der Nabe 15 und dem Hohlrad 13 mehrere Speichen 19 vorzusehen. Diese müssen natürlich entsprechend den zu erwartenden Beschleunigungs- und Verzögerungskräften dimensioniert werden und können entweder (mit entsprechender Breite) radial von der Nabe abstehen oder (entsprechend schmäler) tangential (wie bei einem Fahrrad) von der Nabe abstehen.

Die Ausführung mit Speichen 19 hat den zusätzlichen Vorteil, dass der Luftstrom zu den Bremsen, der für die Kühlung notwendig ist, kaum beeinträchtigt wird. Um die Spurverbreiterung gering zu halten, sollen die Speichen 19 möglichst genau der Kontur der Felge 17 folgen, und die Materialstärke der Inlay-Felge 14 soll möglichst gering sein (Optimierung zwischen Speichenstärke und Speichendicke).

Um den Antrieb möglichst vollständig vor Schmutz zu schützen, ist ein Schutztunnel 20 vorgesehen. Dieser Schutztunnel 20 wird vor der Inlay-Felge 14 montiert und dreht sich - im Gegensatz zu dieser - nicht mit. Der Schutztunnel 20 umschließt fast den gesamten Umfang des Hohlrades 13. Ein Lastarm 21, der fix mit der Achsbefestigung verbunden ist und das Treibrad 11 mit seiner Lagerung trägt, unterbricht den Schutztunnel 20 und hält diesen in seiner Position. Zusätzlich können Haltespeichen 22, die dreidimensional an die Platzsituation im Felgenbereich angepasst sind, den Schutztunnel 20 in Position halten. Diese Haltespeichen 22 sollen so abgestützt werden, dass sie den Schutztunnel 20 gegen das Hohlrad 13 drücken, um Dichtungen 23 vorzuspannen. Zu diesem Zweck können an der Inlay-Felge 14 zwei Metallnasen 24 als Dichtungsplatten vorgesehen sein, gegen die die Dichtungen 23 anliegen. Auf diese Weise stören die Dichtungen 23 bei der Demontage der Inlay-Felge 14 nicht.

Der Schutztunnel 20 ist günstiger Weise aus schalldämmendem Material gefertigt. Da dieses oft nur geringe mechanische Stabilität aufweist, kann oben und/oder unten ein formstabilisierender Steg 25 vorgesehen sein. Es ist aber auch möglich, den Schutztunnel 20 aus stabilem Material zu fertigen und dieses mit geräuschdämmenden Stoffen zu umhüllen.

In Kombination mit einem Explosionsmotor und einem herkömmlichen Bremssystem kann der Elektroantrieb als autonomer Slave betrieben werden. Durch geeignete Sensoren und die Möglichkeit der Aktivierung durch den Fahrzeuglenker kann der Elektroantrieb bei Beschleunigungsvorgängen den Explosionsmotor oder das Bremssystem unterstützen oder ersetzen. Die volle Funktionalität des Explosionsmotors und des Bremssystems bleiben gewährleistet.

## Patentansprüche

1. Fahrzeugantriebssystem mit einem Elektroantrieb und einer Akkumulatoranordnung, insbesondere in Kombination mit einem Explosionsmotor, wobei der Elektroantrieb durch mindestens einen Elektromotor gebildet ist, der auf ein Treibrad (11) einwirkt, das mit einem Antriebsrad des Fahrzeugs kuppelbar ist, wobei das Antriebsrad als Inlay-Felge (14) ausgebildet ist, wobei die Inlay-Felge (14) ein Hohlrad (13) aufweist, wobei das Treibrad (11) mit dem Hohlrad (13) kämmt, und wobei die Inlay-Felge (14) mit einer Nabe (15) gemeinsam mit der Felge (17) des Rades (12) an der Achse (16) des Fahrzeugs mittels der selben Befestigungsmittel befestigbar ist : die Nabe (15) ist zwischen der Achse (16) und der Felge (17) des Rades (12) montiert und mit der Felge (17) gemeinsam mittels Bolzen (10) angeschraubt.

2. Fahrzeugantriebssystem nach Anspruch 1, **dadurch gekennzeichnet, dass** das Hohlrad (13) mit der Nabe (15) der Inlay-Felge (14) über Speichen (19) verbunden ist.

3. Fahrzeugantriebssystem nach Anspruch 1, **dadurch gekennzeichnet, dass** die Inlay-Felge (14) Entwässerungsöffnungen (18) aufweist.

4. Fahrzeugantriebssystem nach einem der Ansprüche 1 bis 3, **dadurch gekennzeichnet, dass** das Hohlrad (13) in einem feststehenden Schutztunnel (20) angeordnet ist.

5. Fahrzeugantriebssystem nach Anspruch 4, **dadurch gekennzeichnet, dass** ein Lastarm (21) vorgesehen ist, der mit der Achse (16) des Fahrzeugs fix verbindbar ist, das Treibrad (11) mit seiner Lagerung trägt und auch den Schutztunnel (20) in Position hält.

6. Fahrzeugantriebssystem nach Anspruch 5, **dadurch gekennzeichnet, dass** der Schutztunnel (20) zusätzlich durch Haltespeichen (22) in Position gehalten ist.

7. Fahrzeugantriebsssystem nach einem der Ansprüche 4 bis 6, **dadurch gekennzeichnet, dass** zwischen dem Schutztunnel (20) und der Inlay-Felge (14) zumindest eine Dichtung (23) vorgesehen ist.

8. Fahrzeugantriebssystem nach Anspruch 7, **dadurch gekennzeichnet, dass** der Schutztunnel (20) gegen die Inlay-Felge (14) vorgespannt ist.

9. Fahrzeugantriebssystem nach einem der Ansprüche 4 bis 8,**dadurch gekennzeichnet, dass** an dem Schutztunnel (20) zumindest ein Steg (25) zur Formstabilisierung vorgesehen ist.

## Claims

1. A vehicle drive system having an electric drive and an accumulator arrangement, in particular in combination with an internal combustion engine, therein the electric drive is formed by means of at least one electric motor which acts upon a main wheel (11) that can be coupled with a driving heel of the vehicle, wherein the driving wheel is formed as an inlay rim (14), wherein the inlay rim (14) has a hallow wheel (13), wherein the main wheel (11) engages with the hollow wheel (13), and wherein the inlay rim (14) can be secured with a hub (15) jointly with the rim (17) of the wheel (12) on the axle (16) of the vehicle by means of the same securing means: the hub (15) is mounted between the axle (16) and the rim (17) of the wheel (12) and is screwed on with the rim (17) jointly by means of bolts (10).

2. A vehicle drive system according to claim 1, **characterised in that** the hollow wheel (13) is connected to the hub (15) of the inlay rim (14) by way of spokes (19).

3. A vehicle drive system according to claim 1, **characterised in that** the inlay rim (14) has drainage openings (18).

4. A vehicle drive system according to one of claims 1 to 3, **characterised in that** the hollow wheel (13) is arranged in a fixed protective tunnel (20).

5. A vehicle drive system according to claim 4, **characterised in that** a load arm (21) is provided that can be fixedly connected to the axle (16) of the vehicle, carries the main wheel (11) with its bearing and also holds the protective tunnel (20) in position.

6. A vehicle drive system according to claim 5, **characterised in that** the protective tunnel (20) is additionally held in position by means of holding spokes (22).

7. A vehicle drive system according to one of claims 4 to 6, **characterised in that** provided between the protective tunnel (20) and the inlay rim (14) there is at least one seal (23).

8. A vehicle drive system according to claim 7, **characterised in that** the protective tunnel (20) is pretensioned against the inlay rim (14).

9. A vehicle drive system according to one of claims 4 to 8, **characterised in that** provided on the protective tunnel (20) there is at least one web (25) for form-stabilization.

## Revendications

1. Système de propulsion pour un véhicule, avec une propulsion électrique et une batterie d'accumulateurs, notamment en association avec un moteur à explosion, ladite propulsion électrique étant formée par au moins un moteur électrique qui actionne une roue d'entraînement (11) pouvant être couplée à une roue motrice dudit véhicule, ladite roue motrice étant réalisée sous forme d'une jante à insérer (14), la jante à insérer (14) comportant une roue creuse (13), la roue d'entraînement (11) s'engrenant avec la roue creuse (13) et la jante à insérer (14) pouvant être fixée, à travers un moyeu (15), ensemble avec la jante (17) de la roue (12) et en mettant en oeuvre les mêmes moyens de fixation, sur l'essieu (16) dudit véhicule : le moyeu (15) est monté entre l'essieu (16) et la jante (17) de la roue (12) et tenu, ensemble avec la jante (17), par vissage au moyen de boulons (10).

2. Système de propulsion pour un véhicule selon la revendication 1, **caractérisé en ce que** la roue creuse (13) est reliée, à travers des rayons (19), au moyeu (15) de la jante à insérer (14).

3. Système de propulsion pour un véhicule selon la revendication 1, **caractérisé en ce que** la jante à insérer (14) comporte des orifices d'évacuation des eaux (18).

4. Système de propulsion pour un véhicule selon l'une des revendications 1 à 3, **caractérisé en ce que** la roue creuse (13) est disposée dans un tunnel de protection (20) fixe.

5. Système de propulsion pour un véhicule selon la revendication 4, **caractérisé en ce que** l'on prévoit un bras de charge (21) qui peut être rendu solidaire avec l'essieu (16) dudit véhicule, qui porte la roue d'entraînement (11) avec son roulement et qui tient également le tunnel de protection (20) dans sa position.

6. Système de propulsion pour un véhicule selon la revendication 5, **caractérisé en ce que** le tunnel de protection (20) est tenu dans sa position, de façon supplémentaire, par des rayons de maintien (22).

7. Système de propulsion pour un véhicule selon l'une des revendications 4 à 6, **caractérisé en ce que** l'on prévoit, entre le tunnel de protection (20) et la jante à insérer (14), au moins un joint (23).

8. Système de propulsion pour un véhicule selon la revendication 7, **caractérisé en ce que** le tunnel de protection (20) est mis sous précontrainte par rapport à la jante à insérer (14).

9. Système de propulsion pour un véhicule selon l'une des revendications 4 à 8, **caractérisé en ce que** l'on prévoit, sur le tunnel de protection (20), au moins une nervure (25) destinée à la stabilisation de la forme.
